**Europäisches Patentamt**

**European Patent Office**

**Office européen des brevets**

(19)

(11) Publication number: **0 120 544**
**B1**

(12) **EUROPEAN PATENT SPECIFICATION**

(45) Date of publication of patent specification: **06.09.89**

(21) Application number: **84200428.5**

(22) Date of filing: **27.03.84**

(51) Int. Cl.⁴: **A 01 F 15/00**

(54) **Agricultural balers.**

(30) Priority: **29.03.83 GB 8308562**

(43) Date of publication of application:
**03.10.84 Bulletin 84/40**

(45) Publication of the grant of the patent:
**06.09.89 Bulletin 89/36**

(84) Designated Contracting States:
**DE FR GB**

(56) References cited:
**DE-A-3 037 812**
**US-A-4 172 354**
**US-A-4 273 036**

(73) Proprietor: **FORD NEW HOLLAND N.V.**
**Leon Claeysstraat 3a**
**B-8210 Zedelgem (BE)**

(72) Inventor: **Decoene, Frans J.G.C.**
**Ruddervoordestraat 19**
**B-8210 Zedelgem (BE)**

(74) Representative: **Vandenbroucke, Alberic T.J.**
**et al**
**Ford New Holland NV. Patent Department Leon**
**Claeysstraat, 3A**
**B-8210 Zedelgem (BE)**

Courier Press, Leamington Spa, England.

## Description

This invention relates to agricultural balers and more particularly to so-called round balers which produce cylindrical bales or rolls of crop material.

In general, round balers are of two types: the expanding chamber type which produces bales with a relatively hard core and a generally high and relatively constant density throughout; and the fixed chamber type which produces bales with a relatively soft core but a relatively compacted or hard outer layer or shell.

An advantage of hard core balers is that they pack more crop material into a bale than similarly sized soft core balers. They also can produce bales of any size up to a maximum which a given machine is capable of producing, with all sizes of bales being in generally good order from the standpoint of being subjected to handling without falling apart.

The advantages of soft core balers are that:
- they produce bales with a reduced tendency to moulding if the crop material is baled wet;
- the bale core presents no problems to cattle when feeding from the bale (whereas hard cores can be difficult to tear apart);
- they produce bales with good weathering characteristics due to the hard shell; the latter also ensuring good looking, "clean" bales which are very stable when being handled;
- the balers are of relatively simple design; and
- the balers normally have no difficulty in forming a bale core (which sometimes can be a problem with hard core balers when handling short lengths of crop material).

It is an object of the present invention to provide a round baler which affords some of the advantages of both a hard core baler and a soft core baler. To this end, it is preferable to provide a generally vertical start chamber in which to commence the formation of a bale and which gradually expands when bale formation progresses. There are two problems associated with this requirement, the first being that of achieving a satisfactory in-feed of crop material to the start chamber, and the second being that of providing adequate support for the bale during formation.

A round baler having extra crop feeder means between the pick-up means and the bale chamber is already known from DE-A-27.31.166. The baler illustrated therein is of the soft core type having a plurality of circumferentially positioned bale forming rolls defining therebetween a fixed bale forming chamber. The extra crop feeder means are provided adjacent the bale chamber inlet but do not contribute in delimiting the bale forming chamber. These extra crop feeder means also do not contribute in supporting a bale being formed in the bale forming chamber.

DE-A-3.037.812 shows a fixed chamber round baler having a bale forming chamber delimited by a plurality of fixedly positioned bale forming rollers. At least one of these rollers is provided with retractable fingers which are arranged to engage a bale being formed in the bale forming chamber to ensure that this bale continues to rotate during both the bale formation and during the wrapping cycle. The embodiment illustrated in the drawings has a pair of lower bale forming rollers which are provided with retractable fingers. These lower rollers support in part a bale being formed in the bale forming chamber. However, the retractable fingers, which are conceived to guarantee a continuous rotation of a bale being formed do not contribute to any substantial degree in transferring crop material from the pick-up into the bale forming chamber.

Round balers of the type having an expandable bale forming chamber and having combined crop feeder and bale support means are disclosed in US-A-4.172.354; US-A-4.244.167 and EP-A-35.114. In the latter two disclosures, the combined crop feeder and bale support means are formed by endless belt type conveyor means. In the other disclosure, said means are formed by a roller having rods or bars welded to its periphery. It has been found that the feeder function of the foregoing prior art arrangements occasionally is less than fully satisfactory.

According to the present invention there is provided a round baler having:
- bale-forming means defining a bale chamber and operable to form a roll bale of crop material fed into said chamber;
- a pick-up means operable to pick-up crop material from the ground for feeding to the bale chamber; and
- crop feeder means provided in crop receiving relationship to and rearwardly of the pick-up means and operable to transfer crop material received from the pick-up means into the bale chamber; said crop feeder means extending at least partially beneath the bale chamber and being disposed so as to, at least assist in supporting a bale as it is being formed,
the crop feeder means being in the form of a driven hollow rotor with a plurality of fingers eccentrically mounted therewithin, and which is characterized in that:
said fingers are extendable and retractable through respective apertures provided in the outer surface of the rotor as the latter is rotated and the arrangement being such that the fingers, on the one hand, are extended in the vicinity of the pick-up means for positively conveying crop material received from the pick-up means in the direction toward the bale-forming chamber and, on the other hand, are substantially retracted at the side of the rotor facing the bale chamber whereby a bale being formed in the bale chamber is supported by the rotor without said fingers fouling said bale.

A round baler in accordance with the present invention will now be described in greater detail, by way of example, with reference to the accompanying drawings, in which:

Figure 1 is a schematic side view showing the machine empty,

Figure 2 is a view similar to that of Figure 1 but showing the machine with a completed bale,

Figure 3 is an enlarged view of a component of Figure 1,

Figure 4 is a partial sectional view on the line IV - IV of Figure 3,

Figure 5 is an enlarged view of another portion of Figure 1, and

Figure 6 is a partial longitudinal section of the component of Figure 5.

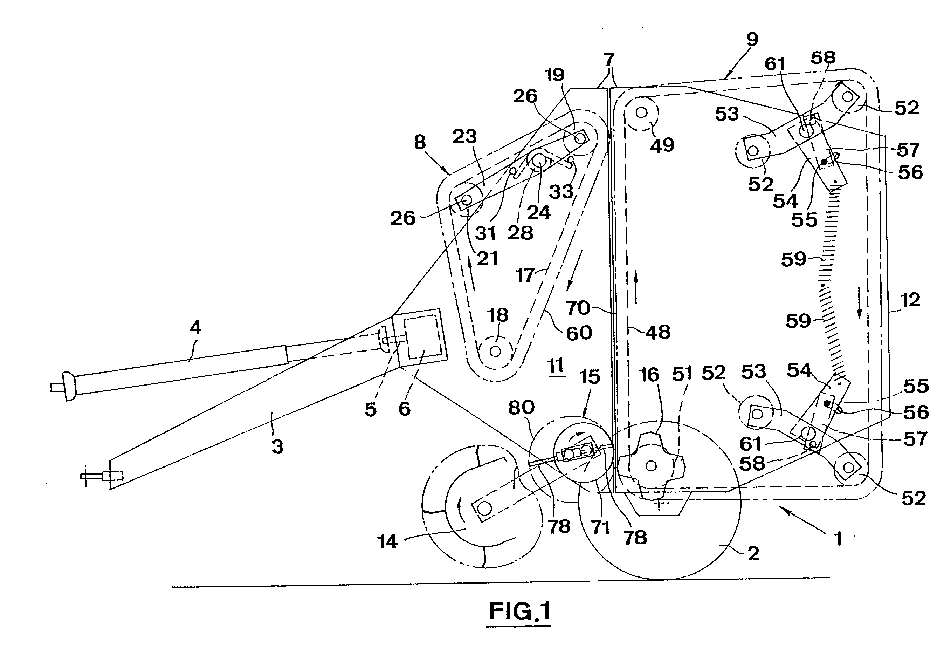

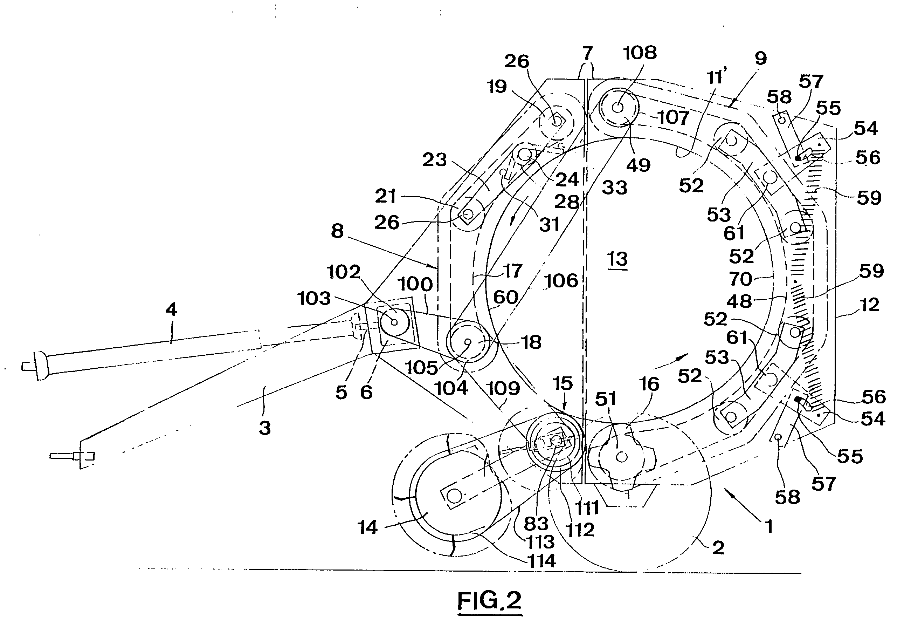

Referring first to Figures 1 and 2, the machine shown therein is in the form of a pull-type round baler comprising a base frame 1 carrying a pair of ground-engaging wheels 2 and having attached thereto a drawbar 3 for connection to a tractor (not shown) or other towing vehicle. A drive shaft 4 extends above the drawbar 3 and is connected at one end to an input shaft 5 of a gearbox 6, and is connectable at the other end to a power-take-off shaft (also not shown) of the towing vehicle. Side walls 7 of the machine are attached to the base frame 1 and partially define a bale forming chamber by way of providing the sides therefor. The front and rear of the bale forming chamber are defined by portions of respective expandable members 8 and 9 which, when the machine is empty (Figure 1), form together with the side walls 7 a generally vertically oriented, wedge-shaped (as seen in side view) start chamber 11, and which expand on the formation of a bale to form a cylindrical bale chamber 11' (Figure 2). Each side wall 7 is split, with the expandable member 8 forming, in conjunction with one portion of each side wall 7, a front portion of the bale chamber and with the expandable member 9 forming, in conjunction with the other portion of each side wall 7, a rear portion of the bale chamber.

As seen in Figures 1 and 2, the rear portion of the bale chamber is larger than the front portion and in fact forms a tailgate 12 for the machine which is pivotable upwardly in order to effect discharge of a completed bale 13 (Figure 2) from the machine. With this differential sizing of the two portions of the bale chamber, the centre of gravity of a completed bale lies within the rear portion of the bale chamber, whereby there is a natural tendency for a completed bale to roll from the machine once the tailgate 12 has been raised, which tendency greatly facilitates bale discharge.

Pivotally mounted at the front of the machine is a conventional crop pick-up unit 14 which, in use, picks up crop material from the ground and delivers it to a combined crop feeder and bale support device 15 located at the mouth of the bale start chamber 11. Located within the rear portion of the bale chamber and disposed at the front bottom corner of the tailgate 12 and adjacent the feeder and support device 15 is a rotor 16 which extends across the full width of the bale chamber, i.e. extends between the side walls 7. The rotor 16 also serves to support a bale during its formation.

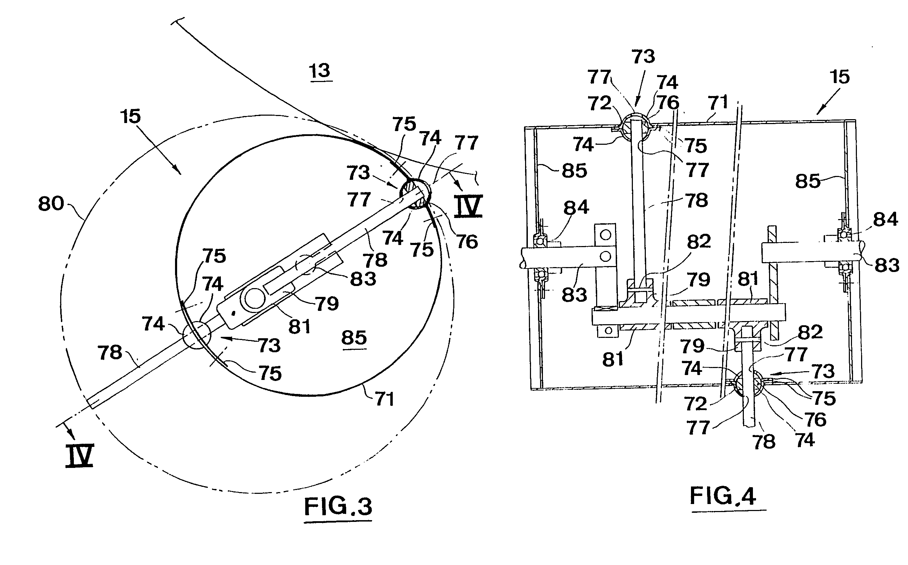

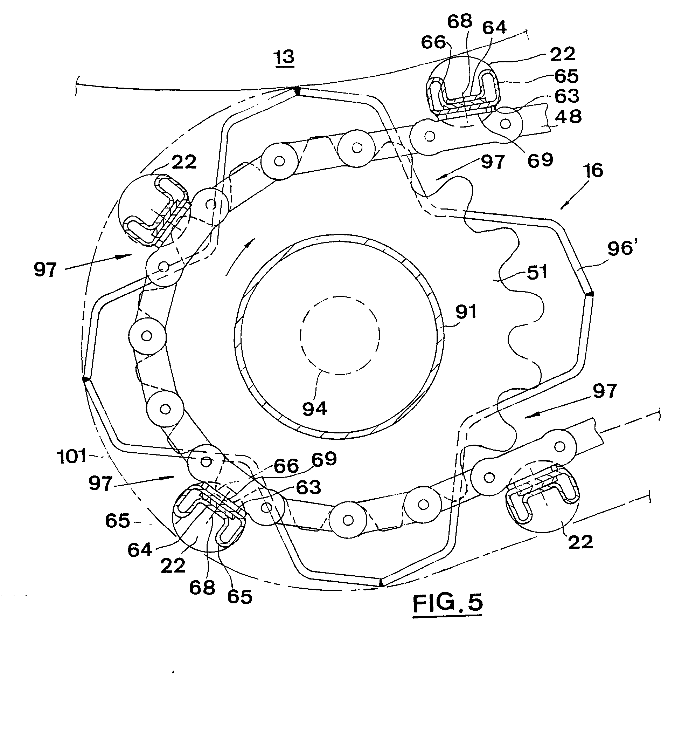

Having described the overall machine in general, certain components will now be described in greater detail with reference to Figures 3 to 6, in addition to Figures 1 and 2, of the drawings. Looking first at the expandable member 8 partially defining the front portion of the chamber, this member 8 comprises two transversely spaced apart endless chains 17 each extending around a driven sprocket 18, an idler sprocket 19 and a non-toothed guide roller 21 disposed at respective apices of a triangle, as seen in side view in Figures 1 and 2. The chains 17 are disposed towards, but inset from respective opposite sides of the machine and are interconnected by a plurality of slats 22 (shown only in Fig. 5) which extend transversely of the machine, with each end of each slat extending past the associated chain and terminating just short of the side walls 7.

The sprocket 19 and guide roller 21 associated with each chain 17 are mounted for rotation on an arm 23 which in turn is pivotally mounted on the frame via a pivot shaft 24 (common to both arms 23) offset from the centre of the arm. The pivot shaft 24 has, at each end, a first portion around which is disposed a torsion spring 28, and a second portion which is received in bearing means mounted on the associated side wall 7. Each spring 28 serves to bias the associated arm 23 in a clockwise direction as seen in Figure 1 and 2, whereby tension in the chain 17 is maintained and any slack resulting from wear is automatically taken up. This tensioning of each chain 17 is achieved by locating one end of each spring 28 against a stop 31 fixed to the related arm 23, and locating the other end against a stop 33 fixed to the associated side wall 7.

It will be noted that, as a bale is being formed in the bale chamber, the arms 23 pivot anticlockwise, as seen in Figures 1 and 2, until the guide rollers 21 engage the opposed runs of the endless chains 17 forming part of the expandable member 8. At this moment, further pivoting of the arms 23 in the anticlockwise direction, and hence further "expansion" of the expandable member 8, becomes impossible, whereby the inner run of the expandable member 8 assumes a virtually fixed position which is very much the same as the fixed position assumed by the bale forming members in a so-called soft core baler or a baler with a fixed bale chamber.

Turning now to the expandable member 9, this also comprises a pair of spaced endless chains 48 located adjacent, but inset from, the respective side walls 7 and interconnected by a plurality of slats (not shown). Again, the slats extend beyond the chains 48 and terminate just short of the side walls 7. Each chain 48 extends around an upper fixed sprocket 49, a lower fixed sprocket 51 associated with the rotor 16, and one or both movable guide rollers 52 of each of an upper and lower pair thereof. When the machine is empty (Figure 1), only one roller 52 of each pair is in engagement with the associated chain 48, but when a bale nears completion, both rollers of each pair are in engagement with said associated chain 48. Also, under this condition i.e. when a bale nears completion in the bale chamber 11', both the inner and outer runs (as seen with respect to the bale chamber) of the chains 48 engage the associated rollers 52. The rollers 52 of each pair are rotatably mounted on respective ends of a crosspiece 53 of a generally T-shaped support, the stem 54 of which is provided with a pivot 55 intermediate its ends. Each pivot 55 extends from the stem 54 through an arcuate slot 56 in the associated side wall 7 and is attached to a support arm 57 pivotally mounted at 58 on said side wall 7 at the centre of curvature of the slot 56. The end of each stem 54 of the T-shaped support remote from the crosspiece 53 is connected to one end of a tension spring 59, the other end of which is attached to the associated side wall 7. The two upper crosspieces 53 and the two lower crosspieces 53 are interconnected by respective transverse tubular beams 61 to ensure that the two upper and two lower supports pivot in unison. The springs 59 serve in the empty condition of the baler, to bias the upper T-shaped supports in a clockwise direction, and the lower supports in an anti-clockwise direction, as viewed in Figure 1, whereby one roller 52 of each pair engages the associated chain 48 to maintain tension therein and again take up any slack in that chain resulting from wear. Also, the support arms 57 are pivoted in a direction towards the bale start chamber 11 until the pivot pins 55 engage the forward ends of the arcuate slots 56, under the action of the springs 59. It will also be noted that in this empty condition the rear expandable member 9 assumes a generally rectangular configuration with the run 70 facing the bale start chamber 11 being oriented generally vertically.

As a bale is being formed in the bale chamber 11', the forward run 70 is moved in a rearward direction against the force of the springs 59 and inbetween the top and bottom sprockets 49 and 51, respectively. As the bale nears completion, both guide rollers 52 of each pair of guide rollers first engage the rear runs of the respective chains 48 and ultimately, the forward runs 70 of the chains 48 engage the "opposite sides" of the guide rollers 52. Any "stretching" of the chains 48 resulting from wear is compensated by the T-shaped supports 53, 54 with the guide rollers 52 thereon moving generally radially outwardly, as seen with respect to the completed bale 13 in the bale chamber 11'. Such radially outward movement is made possible by the provision of the support arms 57 carrying the T-shaped supports being mounted for pivotal movement about the pivots 58, whereby the pivot pins 55 extending through the elongate slots 56 are moved away from the inner ends thereof.

It will be appreciated that, like the forward expandable member 8, the rear expandable member 9 also cannot expand any further once both runs of the chains 48 engage the "opposite sides" of the guide rollers 52. Thus, again in this condition, the expandable member 9 also acts as the fixed bale forming means of a so-called soft core round baler.

It will also be appreciated that, as a result of the guide rollers 21, 52 engaging at times the opposed runs of the respective associated chains 17, 48, these guide rollers 21, 52 need to have smooth outer surfaces, as toothed outer surfaces (such as those of sprockets) would interfere with the proper simultaneous guidance of both runs of the chains.

Turning now to the combined crop feeder and bale support device 15, and referring to Figures 3 and 4, this comprises a hollow rotor 71 having a smooth outer surface and provided with two diametrically opposed rows of apertures 72 each of which receives an insert 73 from within the rotor, the inserts being bolted to the rotor. Each insert 73 comprises two hemispherical shells 74 formed with flanges 75 by which the insert is bolted to the rotor 72, the sphere formed by the two shells containing a bush 76 of elastomeric synthetic plastics material. Each shell 74 is apertured to provide a through aperture 77 for a rod or finger 78 mounted in a radial extension 79 of a bush 81 of an elastomeric synthetic plastics material. Each rod 78 is retained in the extension 79 by a pin 82, and each bush 81 is rotatably mounted on a stationary crankshaft 83 the ends of which are received in bearings 84 provided in end plates 85 of the rotor 71. The rotor body is driven and rotates around the crankshaft 83, whereby the rods 78 are alternately extended (at the side of the rotor adjacent the pick-up unit 14) and retracted (at the side of the rotor adjacent the other rotor 16) by way of sliding in and out of the apertures 77 and bushes 76, the ends of the rods describing the circle indicated at 80.

The combined crop feeder and bale support device 15, together with the facing runs 60, 70 of the expandable member 8, 9 when in the empty condition of the baler define the generally triangular and upright bale starting chamber 11 with the device 15 being provided at a distance beneath the lower end of the member 8, thus providing therebetween a bale chamber inlet opening. The device 15 is further mounted proximate, and forwardly of the rotor 16 so that, in the empty condition of the baler, the generally vertical run 70 of the rear bale forming member 9 is offset to the rear of the device 15, which in part forms the base of the triangular bale starting chamber 11.

The device 15 is further also positioned relative to the lower sprockets 18 of the front bale forming member 8 and the rotor 16 (which is part of the rear bale forming member 9) so that, as a bale is nearing completion within the bale chamber, the bale is supported at least in part by the cylindrical body 71 of the device 15. Hence the cylindrical body 71 is positioned, together with other components on a circumference defining the cylindrical bale chamber 11' when at its maximum diameter.

However, the device 15 is also positioned relative to the bale chamber 11' so that, as a bale is being formed in the bale chamber and is nearing completion, its centre of gravity is moved from generally above the device 15 to the side thereof opposite to the side facing the pick-up device 14.

The retractable fingers 78 are substantially in the retracted position at the point on the cylindrical body 71 of the device 15 where, when a bale is being completed in the bale chamber 11', the bale is supported on the cylindrical body, thereby avoiding the fingers penetrating into the bale and adversely affecting the surface thereof. The fingers 78 are extended to the maximum at the side of the cylindrical body 71, facing the discharge end of the pick-up device 14 in order to take over crop material therefrom and are retracted gradually from the maximum extension position to said point of contact of the bale on the cylindrical body 71, as the device is rotated.

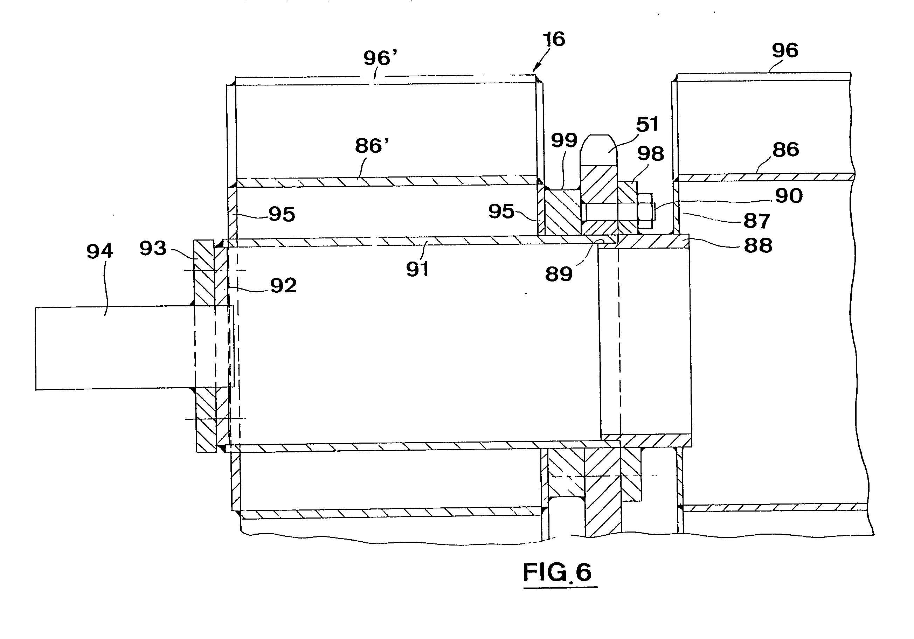

Referring to Figures 5 and 6, the rotor 16 will now be described. The function of the rotor 16 is to provide a positive support for a bale during formation, which support does not impart any substantial vibration to the bale which might impair the formation thereof and/or cause unacceptable wear and/or damage to the machine. As already described, the chains 48 extend around sprockets 51 associated with the rotor 16 and if the rotor were not provided, the slats 22 would continuously pass beneath the bale being formed, thereby raising the bale on each occasion and thus subjecting the bale to vibration in the generally vertical plane. The rotor 16 overcomes this problem by providing pockets for the slats 22 to enter as they pass beneath the bale, whereby the rotor, together with the slats received in the pockets thereof, provide a substantially smooth or continuous surface on which the bale is supported.

The rotor 16 comprises a hollow tubular core 86 extending between the two sprockets 51 and closed at each end by a plate 87 formed with a tubular extension 88 of reduced diameter and concentric with the core and formed with an annular recess 89 around its outer end. The recess 89 receives one end of a tube 91 having the same outer diameter as the extension 88 and being closed at its other and outer end by an end plate 92 which is bolted to a flange 93 carried by a stub shaft 94 by which the rotor is mounted for rotation in bearings (not shown) provided in the respective side walls 7. Each tube 91 is surrounded along the majority of its length by a further tube of the same outer diameter as the core 86 and representing an extension 86' of that core. Each core extension 86' is supported by two annular discs 95 carried by the tube 91.

On the main core 86 and the two core extensions 86' of the rotor 16 there are mounted respective outer rotor surfaces 96 and 96', which are generally star-shaped in cross-section as seen in Figure 5, thus providing four longitudinally extending pockets 97 for the reception of the slats 22 associated with the chains 48. The surfaces 96, 96' are each formed from four identical sections of sheet metal welded together at the "points" of the star and to the respective end plates 87, 95 of the rotor 16.

The two sprockets 51 associated with the rotor 16 are annular and each is welded to an annular disc 99 attached to the tube 91. On assembly, the two ends of the rotor 16 are mounted on the main rotor body by sliding the tubes 91 onto the recesses 89 in the extension 88 and bolting the sprockets 51 to respective discs 98 secured to the extensions 88 via bolts 90 welded to the sprockets 51. Thus the sprockets 51 are inset from the ends of the rotor to match the insetting of the chains 48 from the ends of the slats 22.

As the rotor 16 rotates, the slats 22 move into the pockets 97 as the chains 48 pass around the sprockets 51, whereby a substantially continuous support surface is seen by the bale 13 being formed as presented at any given instant by a slat and a "point" of the star-shaped rotor. In this respect, it will be seen from Figure 5 that when a slat 22 is received in a pocket 97, the radially outer portion of the main body of the slat is located at the circle 101 circumscribed by the "points" of the rotor 16.

From the drawings, and more especially from Figure 2, it will be appreciated that only part of the weight of a bale being formed in the bale chamber is supported on the rotor 16 (and on a slat 22 received in a pocket 97 thereof and on the chains 48), another part of the bale weight being supported, as already mentioned, by the combined feeder and bale supporting device 15.

It should be noted that the number of teeth on each sprocket 51 is N times the number of links in the chains 48 between adjacent slats 22, where N is an integer, although preferably not one. Also, the number of teeth on each sprocket 51 is a multiple of the number of pockets provided in the rotor. It will be seen from Figure 5 that in the embodiment illustrated therein, each sprocket has sixteen teeth which is a multiple of the four pockets 97 and which makes N=4 since a slat 22 is attached to every fourth link of the chains 48.

The drives for the various driven components of the baler are shown in Figure 2 of the drawings, these being omitted from Figure 1 for clarity. A sprocket 102 on the output shaft 103 of the gearbox 6 drives, via a chain 100, one sprocket of a triple sprocket 104 on a shaft 105 on which the sprocket 18 of the front expandable member 8 is mounted, whereby the chains 17 are driven in a clockwise direction as seen in Figures 1 and 2. Both chains 17 are driven since the shaft 105 is common to both sprockets 18. A further chain 106 extends around a second sprocket of the triple sprocket 104 and around a sprocket 107 on a common shaft 108 for the two sprockets 49 of the rear expandable member 9, whereby the two chains 48 are also driven in a clockwise direction as seen in Figures 1 and 2. Thus the runs 60 and 70 of the chains 17 and 48 partially defining the start chamber 11 move in opposite directions so as to impart a rolling motion to the crop material fed to the start chamber.

A chain 109 extends around the third sprocket of the triple sprocket 104 and around a sprocket 111 provided on one end of the cylindrical body 71 of the rotor 15, whereby the latter is driven in a clockwise direction as seen in Figures 1 and 2. A pulley 112 is also coupled to the sprocket 111 and a belt 113 extends from that pulley to a pulley 114 on the pick-up unit 14 so as to drive the latter also in a clockwise direction as seen in Figures 1 and 2. Thus it is seen that the drives to the driven components are effected in a simple manner.

In operation of the embodiment of Figure 1 to 6, the machine is hitched to the tractor or other towing vehicle via the drawbar 3, and the driveshaft 4 connected to the tractor PTO, whereby the chains 17, 48, the rotor 15 and the pick-up 14 are driven as described above. Thus as the machine is towed across a field of previously cut crop material, the latter is picked up by the pick-up 14 and conveyed overtop and rearwardly towards the rotor 15. The extended fingers or rods 78 of the latter take over the crop material and feed it into the mouth of the start chamber 11 against the rising run 70 of the chains 48 and associated slats 22, the fingers 78 then retracting and thus releasing the crop material. It will be appreciated from the foregoing description that the slats 22 are relatively closely spaced, and they serve to carry the crop material a certain way into the start chamber 11 before the crop tumbles under gravity and falls downwardly, assisted by the generally downwardly moving slats 22 of the front expandable member 8. The relatively gentle tumbling action of the crop material results in a generally soft core for the bale being formed. However, the rolling action imparted to the crop material by the rotor 15, and the slats 22 on the facing runs of the chains 17 and 48 results in a smaller core than would otherwise pertain in a conventional soft core baler. Experience has shown that the core usually starts to roll at a distance above the combined feeder and support device 15 and inbetween the facing runs 60, 70 of the bale forming members 8, 9. As the size of the bale core increases, the start chamber 11 becomes full, whereupon the core presses increasingly harder on the slats 22 of the facing runs of the chains 17 and 48 with the result that said runs of the chains 17 are urged to the left as seen in Figure 1, and said runs of the chains 48 are urged to the right, the former against the action of the springs 28 and the latter against the action of the springs 59. Accordingly, the layers of crop material surrounding the soft core begin to be more consolidated, the density of the bale in fact increasing to the outer shell thereof since the springs 28 and 59 progressively increase the tension in the chains 17 and 48.

It will be appreciated that the degree of compaction depends on the forces exerted by the springs 28 and 59. With the illustrated arrangement it is easy and convenient to vary these spring forces and thus vary the density of the bale. Therefore, if it is desired to produce soft core bales pretty much as are conventionally produced with conventional soft core balers, it is sufficient to adjust the springs 28 and 59 accordingly.

It should be noted that as the runs 60, 70 of the bale forming members 8, 9 are deflected as the bale increases in size, the facing runs of the chains 17 and 48, together with the associated slats 22, form complementary portions of a cylinder as seen in Figure 2 to give rise to the cylindrical bale chamber 11'. As already mentioned, this deflection is accompanied by pivotal movement of the arms 23 and the T-shaped supports 53, 54 to the positions indicated in Figure 2. It should also be noted that the arms 23 are pivoted off centre in order to minimize the relative movements between the sprockets 19 and the sprockets 49 so as not to create any sizeable gap therebetween through which crop material may be lost.

When the arms 23 and supports 53, 54 are in the positions of Figure 2, the chains 17 are in contact with opposite "sides", as it were, of the sprockets 18 and 19 and the rollers 21, whereby the chains are positively supported in fixed positions with no slack therein. Likewise the chains 48 are positively supported in fixed positions by the sprockets 49, 51 and the rollers 52. Thus when the bale size of Figure 2 is reached the slats 22 are moved along a fixed path around the bale being completed. As further crop material is still being fed into the bale chamber 11' and as the bale chamber cannot expand further a hard shell or outer layer is formed on the bale with compaction taking place in an inward direction from the outside. The hardness of this outer shell, and hence its weathering characteristics, depend on the amount of crop material fed into the bale chamber after the bale has reached its maximum diameter. This is comparable to the hard shell which can be produced with conventional soft core balers and is totally independant of the initial setting of the springs 28, 59.

As the bale is nearing completion in the bale chamber 11', it is supported in part on the cylindrical body 71 of the device 15 and on the rotor 16, together with the slats 22 of the rear bale forming member 9 as they pass in the successive pockets 97 of the rotor. This occurs without any undue vibration of the bale in the bale chamber and hence also of the baler. It will also be appreciated, mainly from Figure 2, that the forward bale forming member 8, together with the sprockets 18, and the rearward bale forming member 9, together with the lower pairs of guide rollers 52 on the T-shaped support members 53, 54, assist in supporting the weight of the bale in the bale chamber.

As already mentioned, the particular mounting of the T-shaped support member 53, 54 provides compensation for any "stretching" of the bale forming member 9 as a result of wear. When the bale 13 has been completed, the tailgate 12 is raised (by means not shown) above the axis 108 of the sprockets 49 and since the centre of gravity of the bale 13 lies within the rear portion of the bale chamber 11', there is a natural tendency for it to roll from the machine on the raising of the tailgate. This tendency is augmented by the action of the rotor 15, which continues to be driven, and thus positive discharge of a completed bale is achieved.

As soon as a completed bale 13 is discharged from the machine, the springs 28 and 59 return the arms 23 and supports 53, 54, respectively, to the positions of Figure 1, whereby the tapered start chamber 11 is re-formed ready for forming the next bale. It will be appreciated that the machine is capable of forming bales of less than the maximum diameter as bale discharge can be effected at any time by raising the tailgate 12. Whilst any bale less than the maximum size will not have the heavily compacted outer layer or shell, the latter nevertheless will be such that the bale will hold together especially when the springs 28, 59 have been set to give an increased density to the bale being formed.

It will be seen that the present invention provides a round baler which can produce bales with a hard outer shell whilst the density of the crop material within the outer shell can be varied greatly at will from a low density comparable to the characteristics of bales produced with conventional soft core balers to a high density as is known from balers having an expandable bale chamber, thus providing greater flexibility to the operator and combining advantages of conventional soft and hard core balers.

As already mentioned, the rotor 15 has a dual function in feeding crop material to the bale chamber from the pick-up unit 14, and in helping to support the bale as it is being completed. The rotor 15 thus performs an important part in the formation of a bale and without its presence, the pick-up unit 14 would have to be mounted much closer to the mouth of the bale chamber to an extent that it would inevitably have to support each bale being formed, and conventional pick-up units are not constructed to fulfil this purpose.

The function of the rotor 16 is also important in lending further support to each bale as it is formed and in so doing to present, in conjunction with the slats 22 a substantially smooth surface to the bale. To this end the pockets 97 are formed in the surface of the rotor 16 to accommodate the slats 22 as they pass therearound. As already explained, this prevents the slats from imparting generally vertical vibrations to the bale being formed which would impair formation.

Although the illustrated embodiment employs two expandable bale-forming members 8 and 9, the member defining the smaller portion of the bale chamber 11' (be it the front or rear member) may be replaced by one or more of a fixed type of bale-forming means employing, for example, fixedly positioned rollers, or fixedly positioned chain or belt conveyors. Alternatively, the bale-forming members 8 and 9 may be augmented by one or more fixedly positioned bale-forming means. Also the chain type bale forming means 8, 9 may be replaced by belt type bale forming members.

The present invention provides a round baler capable of producing a bale with a hard outer shell (soft core bale characteristics), and with either a relatively high density (hard core bale characteristic), or a rather low density of crop material within the outer shell, without giving rise to an over complicated structure. The machine can produce a maximum sized bale (1.2 metres in diameter) in approximately two minutes, provided crop material is fed to the bale chamber at the appropriate rate. Of this bale-forming time, between 1/3 and 1/4 is devoted to forming the hard shell, i.e. this is the period in which the runs of the chain 17 and 48 are positively supported by the "opposed sides" of all the sprockets and guide rollers provided within the envelopes formed by the respective chains. This is a very important aspect because it provides the possibility of producing with a baler of the type having an expanding bale chamber, bales with an extra hard outer shell, such as is obtained with known balers of the type having a fixed chamber and commonly referred to as soft core balers. It will be appreciated that the tension initially set in the chains 17 and 48 not only determines the hardness of the core but also influences the overall density of the bale except for the hardness of the outer shell which basically is determined by the amount of crop material fed into the bale chamber after the latter has expanded to its maximum diameter. In general, a baler in accordance with the present invention provides a core which is smaller than that provided by known soft core machines due to the positive rolling action imparted to the core by the bale-forming members. Thus the baler produces a highly satisfactory bale having qualities of both soft core and hard core bales without, as already mentioned, being of complicated mechanical construction.

Aspects of the round baler described herein are claimed in the co-pending patent applications EP-A-120.546; EP-A-120.545 and EP-A-121.279.

## Claims

1. A round baler having:
- bale-forming means (8, 9) defining a bale chamber (11) and operable to form a roll bale (13) of crop material fed into said chamber (11);
- a pick-up means (14) operable to pick-up crop material from the ground for feeding to the bale chamber (11); and
- crop feeder means (15) provided in crop receiving relationship to and rearwardly of the pick-up means (14) and operable to transfer crop material received from the pick-up means (14) into the bale chamber (11); said crop feeder means (15) extending at least partially beneath the bale chamber (11) and being disposed so as to, at least assist in supporting a bale (13) as it is being formed,
the crop feeder means (15) being in the form of a driven hollow rotor (71) with a plurality of fingers (78) eccentrically mounted therewithin, characterized in that:
said fingers (78) are extendable and retractable through respective apertures (77) provided in the outer surface of the rotor (71) as the latter is rotated and the arrangement being such that the fingers (78), on the one hand, are extended in the vicinity of the pick-up means (14) for positively conveying crop material received from the pick-up means (14) in the direction toward the bale-forming chamber (11) and, on the other hand, are substantially retracted at the side of the rotor (71) facing the bale chamber (11) whereby a bale (13) being formed in the bale chamber (11) is supported by the rotor (71) without said fingers (78) fouling said bale (13).

2. A baler according to claim 1, characterized in that the rotor (71) of the crop feeder means (15) has a smooth outer surface wherein said apertures (77) are provided for the fingers (78) to extend therethrough.

3. A baler according to claim 1 or 2, characterized in that:

- a portion (12) of the baler is capable of pivoting upwardly relative to a fixed portion about an upper pivot shaft (108) for discharging a completed bale (13);

- the crop feeder means (15) is positioned adjacent the lower end of the fixed portion and proximate the pivotable portion (12) when the latter is in its lowered position; and

- the machine further also comprises additional bale support means (16) provided on the pivotable portion (12) adjacent the lower end thereof and proximate the crop feeder means (15) on the fixed portion when the pivotable portion (12) is in its lowered position.

4. A baler according to any of the preceding claims characterized in that:

- at least part of the bale-forming means (8, 9) are movably mounted so as to define an expandable bale chamber (11) therebetween; said bale chamber (11), when empty and when seen in side view, being generally wedge-shaped and being oriented generally vertically.

5. A baler according to claim 4, characterized in that:

- the bale chamber (11), when empty and when seen in side view, is generally triangular in shape with two generally upright sides being defined by bale-forming means (8, 9) and the third side being formed generally by the crop feeder means (15); and

- the bale chamber (11) comprises generally at its lower end an inlet which is provided between the bale-forming means (8, 9) and the crop feeder means (15).

6. A baler according to claim 5, characterized in that:

- the crop feeder means (15) is positioned proximate and forwardly of the lower end of a rear run (70) of bale-forming means (9) defining in part said chamber (11) on the one hand, and rearwardly of, and at a distance below, the lower end of a front run (60) of bale-forming means (8) also defining in part said chamber (11), on the other hand; the crop feeder means (15) and the lower end of said front run (60) defining therebetween said crop inlet of the bale chamber (11).

7. A baler according to any one of the preceding claims characterized in that:

- in its maximum expansion, the bale chamber (11') is generally cylindrical in shape; and

- the crop feeder means (15) is disposed so as to assist in supporting a bale (13) positioned in the bale chamber (11).

**Patentansprüche**

1. Rundballenpresse mit:

- Rundballen-Formeinrichtungen (8, 9), die eine Rundballenkammer (11) umgrenzen und derartig betätigbar sind, daß sie einen Rundballen (13) aus Erntematerial bilden, das in die Kammer (11) eingeführt wird,

- einer Aufnehmereinrichtung (14), die so betätigbar ist, daß sie Erntematerial von dem Boden aufnimmt, um dieses der Rundballenkammer (11) zuzuführen, und

- einer Erntematerial-Zuführungseinrichtung (15), die in Erntematerial-Aufnahmebeziehung zu und hinter der Aufnehmereinrichtung (14) angeordnet und derart betätigbar ist, daß sie von der Aufnehmereinrichtung (14) empfangenes Erntematerial in die Rundballenkammer (11) überführt, wobei sich die Erntematerial-Zuführungseinrichtung (15) zumindestens teilweise unterhalb der Rundballenkammer (11) erstreckt und so angordnet ist, daß sie zumindestens teilweise zur Abstützung eines Rundballens während seiner Bildung beiträgt, und wobei die Erntematerial-Zuführungseinrichtung (15) die Form eines angetriebenen hohlen Rotors (71) mit einer Vielzahl von darin exzentrisch befestigten Fingern (78) aufweist,

dadurch gekennzeichnet, daß die Finger (78) durch jeweilige in der Außenoberfläche des Rotors (71) vorgesehene Öffnungen (77) ausfahrbar und einziehbar sind, während der Rotor (71) gedreht wird, wobei die Anordnung derart ist, daß die Finger (78) einerseits in der Nähe der Aufnehmereinrichtung (14) ausgefahren sind, um zwangsweise von der Aufnehmereinrichtung (14) empfangenes Erntematerial in Richtung auf die Rundballenkammer (11) zu befördern, und daß die Finger andererseits an der auf die Rundballenkammer (11) gerichteten Seite des Rotors (71) im wesentlichen eingezogen sind, sodaß ein in der Rundballenkammer (11) geformter Rundballen (13) von dem Rotor (71) abgestützt wird, ohne daß die Finger (78) den Rundballen (13) beeinträchtigen.

2. Rundballenpresse nach Anspruch 1, dadurch gekennzeichnet, daß der Rotor (71) der Erntematerial-Zuführungseinrichtung (15) eine glatte Außenoberfläche aufweist, in der die Öffnungen (77) für die Finger (78) ausgebildet sind, durch die sich diese erstrecken.

3. Rundballenpresse nach Anspruch 1 oder 2, dadurch gekennzeichnet, daß

- ein Teil (12) der Rundballenpresse bezüglich eines festen Teils um eine obere Schwenkwelle (108) nach oben verschwenkbar ist, um einen fertiggestellten Rundballen (13) auszuwerfen,

- die Erntematerial-Zuführungseinrichtung (15) benachbart zum unteren Ende des festen Teils und nahegelegen zum schwenkbaren Teil (12) angeordnet ist, wenn sich letzterer in seiner abgesenkten Position befindet, und

- die Maschine weiterhin zusätzliche Rundballen-Abstützeinrichtungen (16) aufweist, die auf dem schwenkbaren Teil (12) benachbart zu dessen unterem Ende und nahegelegen zu der Erntematerial-Zuführungseinrichtung (15) an dem festen Teil angeordnet sind, wenn sich der schwenkbare Teil (12) in seiner abgesenkten Stellung befindet.

4. Rundballenpresse nach einem der vorhergehenden Ansprüche, dadurch gekennzeichnet, daß:

- zumindestens ein Teil der Rundballen-Formeinrichtungen (8, 9) beweglich befestigt ist, sodaß eine ausdehnbare Rundballenkammer (11) zwischen diesen Teilen gebildet wird, wobei die Rundballenkammer (11) im leeren Zustand und bei Betrachtung in Seitenansicht allgemein keilförmig und allgemein vertikal ausgerichtet ist.

5. Rundballenpresse nach Anspruch 4, dadurch gekennzeichnet, daß

- die Rundballenkammer (11) im leeren Zustand und bei Betrachtung in Seitenansicht allgemein eine dreieckige Form aufweist, wobei zwei allgemein aufrecht stehende Seiten durch die Rundballen-Formeinrichtungen (8, 9) gebildet sind, während die dritte Seite allgemein durch die Erntematerial-Zuführungseinrichtung (15) gebildet wird, und

- die Rundballenkammer (11) allgemein an ihrem unteren Ende einen Einlaß aufweist, der zwischen den Rundballen-Formeinrichtungen (8, 9) und der Erntematerial-Zuführungseinrichtung (15) gebildet ist.

6. Rundballenpresse nach Anspruch 5, dadurch gekennzeichnet, daß

- die Erntematerial-Zuführungseinrichtung (15) einerseits nahegelegen zu und vor dem unteren Ende eines hinteren Stranges (70) von teilweise die Kammer (11) umgrenzenden Rundballen-Formeinrichtungen (9) und andererseits hinter und in einer Entfernung von dem unteren Ende eines vorderen Stranges (60) von Rundballen-Formeinrichtungen (8) angeordnet ist, die ebenfalls teilweise die Kammer (11) bilden, wobei die Erntematerial-Zuführungseinrichtung (15) und das untere Ende des vorderen Stranges (60) zwischen sich den Erntematerial-Einlaß der Rundballenkammer (11) umgrenzen.

7. Rundballenpresse nach einem der vorhergehenden Ansprüche, dadurch gekennzeichnet, daß:

- die Rundballenkammer (11') bei ihrer maximalen Ausdehnung eine allgemein zylindrische Form aufweist, und

- die Erntematerial-Zuführungseinrichtung (15) so angeordnet ist, daß sie zur Unterstützung eines in der Rundballenkammer (11) angeordneten Rundballens (13) beiträgt.

**Revendications**

1. Ramasseuse-presse de balles rondes comportant:

- des moyens de pressage de balles (8, 9) définissant une chambre à balles (11) et aptes à opérer pour presser une balle cylindrique (13) de produits de récolte chargés dans ladite chambre (11);

- un moyen de ramassage de balles (14) apte à opérer pour ramasser depuis le sol des produits de récolte destinés à être chargés dans la chambre à balles (11); et

- des moyens de chargement de récolte (15) prévus dans une relation de réception de récolte vis-à-vis et à l'arrière du moyen de ramassage (14) et aptes à opérer pour transférer les produits de récolte qu'ils reçoivent du moyen de ramassage (14) dans la chambre à balles (11); lesdits moyens de chargement de récolte (15) s'étendant au moins partiellement sous la chambre à balles (11) et étant disposés de façon à au moins aider à supporter une balle (13) en train d'être pressée, et lesdits moyens de chargement de récolte (15) se présentant, en outre, sous la forme d'un rotor creux (71) entraîné et pourvu de plusieurs doigts (78) montés à l'intérieur de lui, d'une manière excentrique:

caractérisée en ce que

lesdits doigts (78) sont extensibles et rétractables, à travers des orifices (77) respectifs ménagés dans la surface extérieure du rotor (71), pendant que celui-ci est animé d'un mouvement de rotation, la disposition étant telle que les doigts (78) sont, d'une part, étendus à proximité du moyen de ramassage (14), en vue d'acheminer efficacement les produits de récolte qu'ils reçoivent du moyen de ramassage (14) dans la direction orientée vers la chambre de pressage de balles (11), et, d'autre part, sensiblement rétractés du côté du rotor (71) tourné vers la chambre à balles (11), moyennant quoi une balle (13) en cours de pressage dans la chambre à balles (11) est supportée par le rotor (71), sans que lesdits doigts (78) ne gênent ladite balle (13).

2. Ramasseuse-presse selon la revendication 1, caractérisée en ce que le rotor (71) des moyens de chargement de récolte (15) présente une surface extérieure lisse dans laquelle lesdits orifices (77) sont ménagés pour que les doigts (78) s'étendent à travers eux.

3. Ramasseuse-presse selon la revendication 1 ou 2, caractérisée en ce que:

- une partie (12) de la ramasseuse-presse est capable de pivoter vers le haut par rapport à une partie fixe autour d'un arbre de pivotement supérieur (108), en vue de décharger une balle (13) terminée;

- les moyens de chargement de récolte (15) sont positionnés au voisinage de l'extrémité inférieure de la partie fixe et à proximité de la partie apte à pivoter (12), lorsque cette dernière n'est pas dans sa position abaissée; et

- la machine comporte, en outre, un moyen de support de balles supplémentaire (16) prévu sur la partie apte à pivoter (12) au voisinage de l'extrémité inférieure de celle-ci et à proximité des moyens de chargement de récolte (15) sur la partie fixe, lorsque la partie apte à pivoter (12) est dans sa position abaissée.

4. Ramasseuse-presse selon l'une quelconque des revendications précédentes, caractérisée en ce que:

- les moyens de pressage de balles (8, 9) sont, au moins en partie, montés mobiles de façon à définir entre eux une chambre à balles (11) extensible; ladite chambre à balles (11) étant, lorsqu'elle est vide et qu'on la considère en vue latérale, dans l'ensemble cunéiforme et orientée, d'une manière générale, verticalement.

5. Ramasseuse-presse selon la revendication 4, caractérisée en ce que:

la chambre à balles (11) a, d'une manière générale, lorsqu'elle est vide et qu'on la considère en vue latérale, une configuration triangulaire dont deux côtés dans l'ensemble verticaux sont définis par les moyens de pressage de balles (8, 9), tandis que le troisième côté est formé, d'une manière générale, par les moyens de chargement de balles (15); et

- la chambre à balles (11) comporte, d'une manière générale au niveau de son extrémité inférieure, un orifice d'entrée prévu entre les moyens de pressage de balles (8, 9) et les moyens de chargement de récolte (15).

6. Ramasseuse-presse selon la revendication 5, caractérisée en ce que:

- les moyens de chargement de récolte (15) sont positionnés à proximité et à l'avant de l'extrémité inférieure d'un brin arrière (70) du moyen de pressage de balles (9) qui définit partiellement ladite chambre (11) d'une part, et à l'arrière et à une certaine distance au-dessous de l'extrémité inférieure d'un brin avant (60) du moyen de pressage de balles (8) qui définit également partiellement ladite chambre (11), d'autre part; les moyens de chargement de récolte (15) et l'extrémité inférieure dudit brin avant (60) définissant entre eux ledit orifice d'entrée de récolte de la chambre à balles (11).

7. Ramasseuse-presse selon l'une quelconque des revendications précédentes, caractérisée en ce que:

- dans son extension maximale, la chambre à balles (11') a, dans l'ensemble, une configuration cylindrique; et

- les moyens de chargement de récolte (15) sont disposés de façon à aider à supporter une balle (13) positionnée dans la chambre à balles (11).

FIG.1

EP 0 120 544 B1

FIG.2

FIG.4

FIG.3

FIG.5

EP 0 120 544 B1

FIG.6